# EUROPEAN PATENT APPLICATION

(11) **EP 3 809 264 A1**
(43) Date of publication of application: **21.04.2021**
(21) Application number: 19202949.4
(22) Date of filing: 14.10.2019
(51) Int. Cl.: G06F 9/50, G06F 8/60

(54) **DEPLOYMENT OF SOTFWARE COMPONENTS IN A DISTRIBUTED COMPUTING SYSTEM**

(71) Applicant: Siemens Aktiengesellschaft, 80333 München (DE)
(72) Inventor: Mittermeier, Ludwig Andreas, 81541 München (DE); Müller, Harald, 82229 Seefeld-Hechendorf (DE); Premnadh, Sreenath, 82008 Unterhaching (DE)

(57) **Abstract**

A method includes obtaining (101) candidate deployments of software components to computing nodes in accordance with Quality of Service, QoS, parameters of the software components and resources of the computing nodes, selecting (102) at least one deployment from the candidate deployments based on one or more deployment constraints, and triggering (103) execution of the at least one deployment.

## Description

### TECHNICAL FIELD

Various examples concern techniques facilitating deployment of software components to computing nodes of a distributed computing system, e.g., in cloud or edge environments. A selection at least one deployment can be based on Quality-of-Service (QoS) parameters of the software components, resources of the computing nodes, as well as one or more selection constraints.

### BACKGROUND OF THE INVENTION

With emerging technologies related to network-, edge- and cloud computing, the need of distributed computing systems having components that are located on different computing nodes, which can communicate via message passing and coordinate their actions, has increased. Within these distributed computing systems, the computing nodes interact with each other to solve a common computing tasks. The computing nodes can be physically distinct units. The computing nodes can be distributed across multiple sites.

Software components associated with a computing task are distributed or deployed on the computing nodes. In reference implementations, the distribution of software components to computing nodes can be based on QoS parameters. QoS parameters are, for example, latency constraints of an associated application requiring the computing task, time jitter limitations, etc. Typically, the QoS parameters are compared with computational resources of the computing nodes. Typical computational resources include memory, processing power, hard-disk space, etc. It can then be judged whether a certain deployment - i.e., mapping of software components to computing nodes - can fulfill the QoS parameters in view of the available computational resources.

Techniques are known that distribute software components to computing nodes. For example, the container orchestration system "Kubernetes" (also known as "K8s") solves the distribution of software components using a so-called scheduler. The scheduler processes QoS parameters, calculates the optimal deployment of software components on available computing nodes according to specified processing steps and executes the optimal deployment directly after the calculation. The scheduler selects the deployment executes the deployment instantly.

Such techniques face certain restrictions and drawbacks. There is a limited flexibility in tailoring the operation of the scheduler. The operation of the scheduler is not transparently provided to a user (black-box).

### SUMMARY OF THE INVENTION

As a consequence, there is a need improving the selection of a deployment of a distributed computing system.

According to various examples described herein, it is possible to enable the consideration of various information relevant for the distribution of software components.

This task is solved by a method for deploying software components to computing nodes of a distributed computing system in an industrial cloud or edge environment based on QoS parameters according to claim 1 and a computing node according to claim 13. The dependent claims define preferred and advantageous examples of the present invention.

According to an aspect, there is a method for deploying software components to computing nodes of a distributed computing system. The method comprises obtaining candidate deployments of software components to computing nodes in accordance with QoS parameters of the software components and resources of the computing nodes, selecting at least one deployment from the candidate deployments based on one or more selection constraints, and triggering execution of the at least one deployment.

The method enables a separation of (i) the determining one or more candidate deployments based on computational resources and QoS parameters (scheduling), and (ii) the execution the at least one deployment. I.e., the one or more candidate deployments that are scheduled in accordance with computational resources and QoS parameters do not have to be executed immediately after the scheduling. Rather, the execution can be separated logically and in time domain from the initial scheduling. Such separation leads to a high degree of transparency and enables the consideration of the one or more additional selection constraints (i.e., beyond QoS parameters and computational resources) between scheduling and execution. Thereby, the selection of the at least one deployment can be tailored flexibly.

According to an example, said selecting is in accordance with a selection process.

As a general rule, the selection process can define how the selection of the at least one deployment from the multiple candidate deployments is implemented. For instance, the selection process could specify how many selection constraints are considered, or a sequence of considering the selection constraints. The selection process could specify how a given selection constraint affects the selection of the at least one deployment.

According to various examples, the selection process can be configurable. I.e., it is possible to use different selection processes for different types of software deployments, e.g., associated with different types of software.

As a general rule, it would be possible that the selection process is configured based on one or more configuration constraints. The configuration constraints can specify details with respect to how to implement the selection process. The configuration constraints can be at least partly different or the same as the one or more selection constraints considered in the selection itself.

For example, it would be possible that the selection process includes multiple stages. I.e., where there are multiple candidate deployments available, it is possible to iteratively narrow down the result space corresponding to the at least one selected deployment, for the various stages.

The method can include configuring the selection process, said configuring comprising at least one of adding, removing, or re-arranging stages of the selection process based on the one or more configuration constraints.

The configuration of the selection process enables a more flexible selection of deployments, which is easier to change, extend or customize.

As a general rule, there are various options available for implementing the one or more configuration constraints based on which the selection process is configured. A few examples are given below.

For instance, it would be possible to consider a configuration and/or an architecture of the distributed computing system. The configuration and/or the architecture could relate to a context of the distributed computing system. The configuration of the distributed computing system can describe the mode of operation, protocols for communication between the computing nodes, use of virtual machines and/or containers, operating systems being used, load balancing techniques being used, and so forth. The architecture can describe a network setup used for exchanging control messages between the various computing nodes. For instance, it would be possible that different types or architectures of the distributed computing system have different requirements in terms of the appropriate deployments. For example, a first architecture or configuration can cope well with a highly distributed deployment in which a large number of computing nodes is engaged in solving a computational tasks; while a second architecture or configuration can require a limitation as to the number of involved computing nodes. Ccomputing nodes of the distributed computing system can have different criticality level with regard to the distribution of the software components to the computing nodes. Therefore, the configuration constraints could include a criticality level of at least one of the software components or the computing nodes of the distributed computing system.

Accordingly, it would be possible to emphasize or de-emphasize corresponding selection constraints associated with the distributed computing system by appropriately configuring the selection process in which the selection constraints are then taken into account. To give an example, it would be possible to prioritize or de-prioritize configuration constraints associated with the distributed computing system in the selection process.

Thereby, the selection process can be individually adapted.

As a further example, the selection process can be further configured based on a context of the candidate deployments.

For example, a context of the candidate deployments could specify the QoS parameters considered in the determination of the candidate deployments. The context of the candidate deployments could specify a type of the considered QoS parameters, e.g., latency, jitter, etc. The context of the candidate deployments could specify a node that has determined the candidate deployments. The context of the candidate deployments could also specify an urgency of execution of the selected at least one deployment from the candidate deployments; to give an example, an application may require solving of a computational task urgently. In such a scenario, the execution of the at least one deployment should not be overly delayed by a lengthy selection process and, accordingly, the selection process could be streamlined by, e.g., reducing the number of stages.

Another example relates to the criticality level of the candidate deployments. For instance, each candidate deployment may be classified in accordance with a criticality level. Non-critical candidate deployments may not be subjected to said selection; while critical candidate deployments may be subject to said selection. The criticality level could depend on a type of the software components or the state of the distributed computing system.

Thereby, the selection process can be further optimized and individualized/tailored.

The candidate deployments can be obtained from at least one computing node of the distributed computing system, e.g., via an application interface and/or in accordance with a predefined workflow. For example, a respective control message may be received via the application interface. The application interface may be standardized so as to allow interaction with the distributed computing system by third-party computing nodes that are not part of the distributed computing system (external nodes). Likewise, the workflow can define a timing ruleset for the interaction between external nodes and the computing nodes of the distributed computing system.

The execution of the at least one deployment can then be triggered by a control message transmitted to at least one computing node of the distributed computing system via the application interface and/or in accordance with the predefined workflow.

This allows for the necessary computing effort required for determining the at least one deployment to be executed to be split up, e.g., between multiple nodes of the distributed computing system and even an external node. The selection from the candidate deployments can be executed by an external node. Also, it becomes possible to take into account selection constraints that are not native to the distributed computing system, but rather depend on external circumstances.

As a general rule, there are various options available for implementing the selection process. More specifically, there are various options available for the one or more selection constraints that are taken into account when selecting the at least one deployment from the candidate deployments.

According to an example, the one or more selection constraints comprise user control data received via a human-machine interface. For example, a human expert can select a deployment from candidate deployments based on his knowledge and experience. User interaction becomes possible.

According to an example, the one or more selection constraints comprise a blacklisting or whitelisting filter function.

With this feature, suitable one or more deployments can be filtered out in a simple, efficient and customized way.

According to an example, the one or more selection constraints comprise legal and/or regulatory aspects.

By examining legal and/or regulatory aspects, it is possible to filter out those deployments that are not permitted due to these aspects. It may also be possible that there is a warning to a human expert after a violation has been detected. If such a check is not carried out, the deployment may violate the rights and/or rules. For instance, regulatory constraints may specify territorial constraints; e.g., whether certain computational tasks are permitted to be carried out in certain jurisdictions in which the distributed computing system may include computing nodes.

According to an example, said selecting is based on a machine-learning algorithm trained based on historical data indicative of previously executed historical deployments.

Thus, the benefits associated with artificial intelligence can be incorporated into the method. Machine learning algorithms are efficient, can recognize patterns and can make predictions to optimize the selection of deployments. Example machine-learning algorithms include artificial neural networks, support vector machines, etc..

A computing node includes a processor configured to obtain candidate deployments of software components to computing nodes of a distributed computing system. The candidate deployments are determined in accordance with QoS parameters of the software components and resources of the computing nodes. The processor is further configured to select at least one deployment from the candidate deployments. Said selecting is based on one or more selection constraints. Further, the processor is configured to trigger execution of the at least one deployment.

A computer program or a computer-program product includes program code. The program code can be loaded by a processor and executed by the processor. Executing the program code causes the processor to perform a method of deploying software components to computing nodes of the distributed computing system. The method includes obtaining candidate deployments of software components to computing nodes. The candidate deployments are determined in accordance with QoS parameters of the software components, as well as in accordance with resources of the computing nodes. The method further includes selecting at least one deployment from the candidate deployments based on one or more selection constraints. Further, the method includes triggering execution of the at least one deployment.

It is to be understood that the features mentioned above and those yet to be explained below may be used not only in the respective combinations indicated, but also in other combinations or in isolation without departing from the scope of the invention.

The examples described above and the examples described below can be combined with each other and with other examples.

### BRIEF DESCRIPTION OF THE DRAWINGS

The characteristics, features and advantages of this invention described above, as well as the way in which they are achieved, become clearer and more comprehensible in the context of the following description of the examples of execution, which are explained in more detail in the context of the figures.
- FIG. 1: illustrates a distributed computing system and a deployment of software components to computing nodes of the distributed computing system according to various examples.
- FIG. 2: illustrates a computing node.
- FIG. 3: is a flowchart of a method according to an example of the present invention.
- FIG. 4: is a flowchart of a method according to an example of the present invention.
- FIG. 5: schematically illustrates a selection process of a selection of at least one deployment from multiple candidate deployments according to examples.

### DETAILED DESCRIPTION OF THE INVENTION

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, examples of the invention will be described in detail with reference to the accompanying drawings. It is to be understood that the following description of examples is not to be taken in a limiting sense. The scope of the invention is not intended to be limited by the examples described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

In the following, techniques for deploying software components to computing nodes are described. Various techniques are based on the finding that reference implementations of determining a deployment face certain restrictions and drawbacks: Firstly, as conventionally determining and execution of a deployment is done by using a kind of black-box approach, there is no transparency about the reasons why a particular deployment has been selected and executed. Secondly, as a determined deployment is conventionally executed immediately after selection, there is no possibility to integrate and execute activities between selection and execution. Thirdly, there is no possibility to consult external sources of information when determining a deployment. In general, the problem with reference techniques is that only QoS parameters and information can be taken into account which are part of / native to the distributed computing system to which the system (in particular the scheduler) has access. Changes to the process are difficult torn implement. According to the techniques described herein, such shortcomings and deficiencies are mitigated.

According to the techniques described herein, a deployment can be determined (i) based on QoS parameter and computation resources, as well as (ii) based on one or more further selection criteria.

In detail: Candidate deployments of software components to computing nodes can be obtained, from which a deployment can be selected. In particular, determining of the at least one deployment and execution can be separated from each other - logically and in time domain -, which leads to a high degree of transparency of the method.

The techniques may find application in an industrial cloud or edge computing environments.

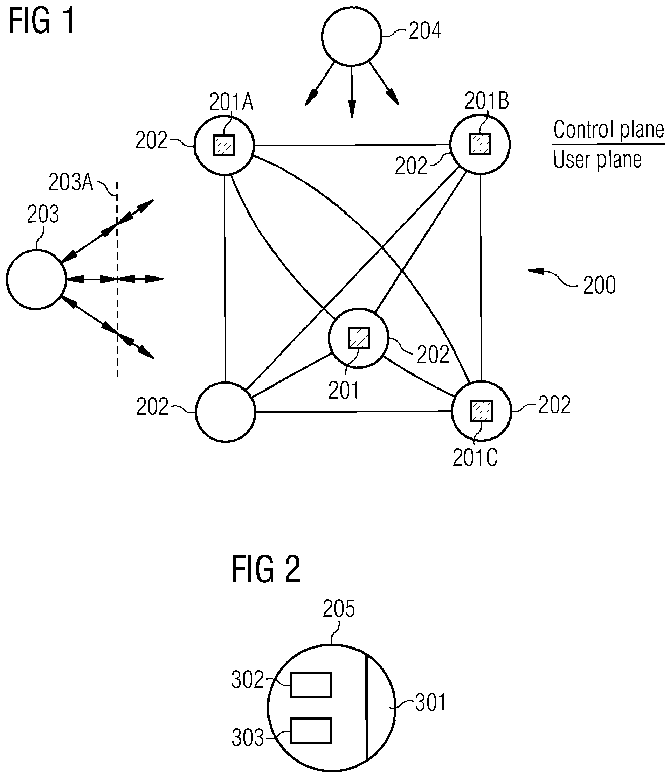

FIG. 1 illustrates aspects with respect to a distributed computing system 200. FIG. 1 illustrates computing nodes 202 of the distributed computing system 200. The distributed computing system 200 is composed of the computing nodes 202 of the distributed computing system 200 - e.g., part of a user plane of the distributed computing system 200 - and a control node 204 - e.g., part of a control plane of the distributed computing system 200. An external node 203 can communicate with the distributed computing system 200, e.g., via an application interface 203A.

Fig. 1 also illustrates aspects with respect to a deployment of software components 201, 201A-201C. Software components 201, 201A-201C are deployed to some of the computing nodes 202 of the user plane of the distributed computing system 200. The particular mapping between the software components 201, 201A-201C is defined by a deployment.

Conventionally, the deployment is determined by a scheduling functionality, typically residing at the control node 204. Such scheduling takes into account QoS parameters of the various software components 201,201A-201C, as well as computational resources of the computing nodes 202 that execute or potentially execute the software components 201, 201A-201C. According to examples described herein, it is possible to enhance the determining of the deployment, by taking into account one or more selection constraints. Further, the determining of the deployment can be split up into two processes, e.g., a scheduling functionality at the control node 204 for providing candidate deployments and a subsequent selection of at least one deployment to be executed in a further selection process that may be implemented, e.g., at the external node 203.

FIG. 2 is a schematic illustration of a computing node 205. For example, the computing node 205 may implement the control node 204, and/or a computing node 202, and/or the external 203 (cf. Fig. 1).

The computing node 205 comprises an interface 301, a processor 302, and a memory 303. Software can be loaded from the memory 303 and executed by the processor 302. Upon executing the software, the processor 302 could perform: obtaining candidate deployments via the interface 301; executing a selection process to select at least one deployment from the candidate deployments based on one or more selection constraints; triggering execution of the selected at least one deployment; performing a scheduling functionality to determine the candidate deployments in accordance with QoS parameters and resources of computing nodes; etc.

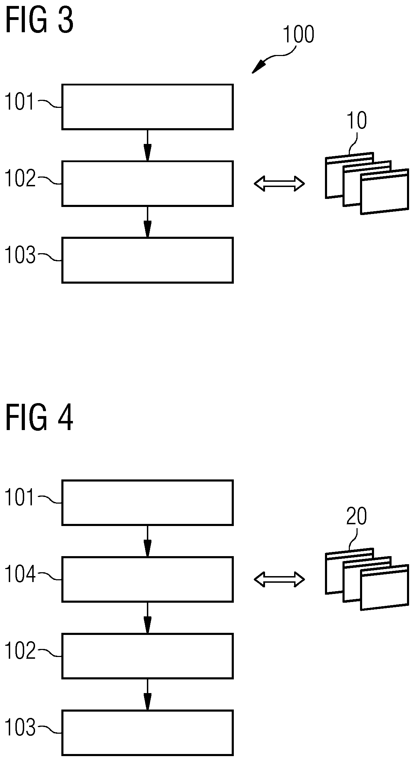

In the following, such and further functionality is described in more detail using the flow diagram of the FIG. 3. FIG. 3 shows a method 100 for facilitating deployment of software components to computing nodes of a distributed computing system.

The method 100 of FIG. 3, for example, can be executed by the processor 302 of a node 205 (see FIG. 2), for example based on program code from memory 303. For example, the method 100 could be implemented by the external node 203 or the control node 204.

In box 101, candidate deployments of software components to computing nodes are obtained, in accordance with QoS parameters of the software components and resources of the computing nodes. The candidate deployments can be obtained from a scheduling functionality. The candidate deployments can be obtained in machine-readable form. The scheduler functionality can match QoS parameters and resources of the computing nodes and can calculate candidate deployments.

The candidate deployments can be received in box 101 from at least one node 202, 204 of the distributed computing system 200, e.g., via the application interface 203A and/or in accordance with a predefined workflow.

Next, the candidate deployments are further processed at box 102. In particular, a selection process can be executed. The selection process is for selecting at least one deployment from the candidate deployments.

For example, a list of candidate deployments may be created in order to rank the candidate deployments. The list can be modified during the selection process (i.e., between calculation of the candidate deployments and execution of the deployment), to implement the selection. A deployment can be selected from the list or from the modified list. The advantage here is that the creation of lists results in a high degree of transparency.

The selection can take into account one or more selection constraints 10. The one or more selection constraints 10 can comprise user control data received via a human-machine interface, e.g., of the external node 203. A guided and continuous human-machine-interaction would be possible: it would be possible to present in an appropriate manner the ranked list of calculated candidate deployments to a human expert, who can select a deployment based on his knowledge and experience.

The one or more selection constraints 10 can comprise a blacklisting or whitelisting filter function.

The one or more selection constraints can comprise legal and/or regulatory aspects. It is possible to check legal and/or regulatory aspects and filter out those deployments that are not allowed due to these aspects.

Selecting can be based on a machine-learning algorithm trained based on historical data indicative of previously executed historical deployments. It would be possible to compare candidate deployments with historical empirical data or with data of comparable systems based on artificial intelligence and then select on this basis a deployment.

At box 103, execution of the at least one deployment is triggered. This can include transmitting a control message to a node 202, 204 of the distributed computing system 200, e.g., via the application interface 203A and in accordance with the workflow.

As will be appreciated from the above, by implementing the selection at box 102, a versatile and tailored approach to determining the at least one deployment to be executed is provided for. In particular, it is possible to interpose - between scheduling and execution - the selection process. An even higher degree of flexibility can be provided by configuring the selection process itself. This is described below in connection with FIG. 4.

FIG. 4 is a flowchart of a method according to various examples. The method of FIG. 4 can be executed, e.g., by the controller 204 or the external node 203 (cf. FIG. 1). The method of FIG. 4 generally corresponds to the method of FIG. 3. FIG. 4 further includes box 104. At box 104, the selection process executed subsequently at box 102 is configured.

Configuring the selection process can comprise at least one of adding, removing, or re-arranging stages of the selection process based on one or more configuration constraints 20.

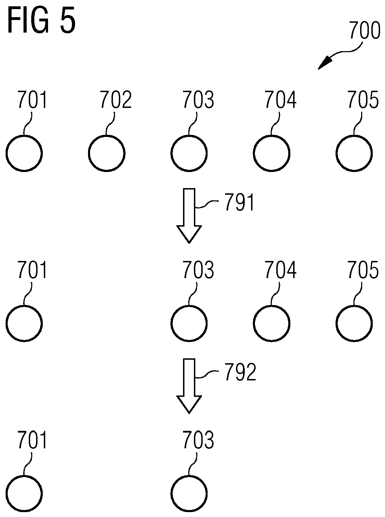

Fig. 5 schematically illustrates aspects of a selection process 700. The selection process 700 includes two stages 791-792. Initially, the candidate deployments 701-705 are obtained, e.g., in box 101 (cf. FIG. 3 and FIG. 4).

Then, in the stage 791, the candidate deployment 702 is removed, e.g., based on a blacklisting filter. In stage 792, the candidate deployments 701 and 703 are maintained, e.g., due to a whitelisting filter.

For instance, the stages 791, 792 could be configured based on one or more of the configuration constraints 20, e.g., at box 104 (cf. FIG. 4). The configuration constraints could include a context of the distributed computing system (200) and/or a context of the candidate deployments. It is conceivable that in case of large or complex distributed computing systems, the selection process is configured by adding an additional suitable selection constraints as respective stages, to improve the selection process for providing an appropriate deployment.

For instance stage 791 could be added, to check for violation of regulatory requirements using the respective blacklisting filter.

The selection process 700 may be configured based on a criticality level of at least one of the software components or the computing nodes 202 of the distributed computing system 200. Software components 201 and computing nodes 202 can be classified as critical or uncritical. A more differentiate classification into several different criticality levels is conceivable. The criticality can depend, for example, on the type of the software component to be distributed or the system status at time of distribution. It is possible that uncritical software deployments can be executed without any specific selection stage taking place. On the other hand, critical software deployments can take place only after they have been subject to the stages 791-792 of the selection process 700.

Furthermore, the selection process 700 can be configured based on the current time. Candidate deployments can be divided into different criticality levels. The configuration of the selection process may depend on time, place and situation. For example, selection processes can contain different selection stages if the selection is performed outside working hours, in summer, in different countries or in a high-risk situation.

Although the invention has been shown and described with respect to certain preferred examples, equivalents and modifications will occur to others skilled in the art upon the reading and understanding of the specification. The present invention includes all such equivalents and modifications and is limited only by the scope of the appended claims.

For instance, techniques have been described in which the candidate deployments are determined based on QoS parameters. However, other parameters can also be used instead or additionally.

## Claims

1. A method (100) of deploying software components (201, 201A-201C) to computing nodes (202) of a distributed computing system (200), the method comprising:
obtaining (101) candidate deployments of software components (201, 201A-201C) to computing nodes (202) determined in accordance with Quality of Service, QoS, parameters of the software components and resources of the computing nodes,
selecting (102) at least one deployment from the candidate deployments based on one or more selection constraints (10), and
triggering (103) execution of the at least one deployment.

2. The method according to claim 1,
wherein said selecting (102) of the at least one deployment is in accordance with a selection process comprising multiple stages,
wherein the method further comprises:
configuring (104) the selection process, said configuring of the selection process comprising at least one of adding, removing, prioritizing, or re-arranging the stages of the selection process based on one or more configuration constraints (20).

3. The method according to claim 2,
wherein the one or more configuration constraints comprise at least one of a configuration or an architecture of the distributed computing system (200).

4. The method according to claim 2 or 3,
wherein one or more configuration constraints comprise a context of the candidate deployments.

5. The method according to claim 4,
wherein the one or more configuration constraints comprise a criticality level of the candidate deployments.

6. The method according to any one of the preceding claims,
wherein the candidate deployments are obtained from at least one node (202, 204) of the distributed computing system (200) via an application interface (203A) and/or in accordance with a predefined workflow.

7. The method according to any one of the preceding claims,
wherein the execution of the at least one deployment is triggered by a control message transmitted to at least one computing node (202) of the distributed computing system (200) via an application interface and/or in accordance with a predefined workflow.

8. The method according to any one of the preceding claims,
wherein the method is executed by an external node (203) not part of the distributed computing system (200).

9. The method according to any one of the preceding claims,
wherein the one or more selection constraints (10) comprise user control data received via a human-machine interface.

10. The method according to any one of the preceding claims,
wherein the one or more selection constraints (10) comprise a blacklisting or whitelisting filter function.

11. The method according to any one of the preceding claims,
wherein the one or more selection constraints (10) comprise legal and/or regulatory aspects.

12. The method according to any one of the preceding claims,
wherein said selecting (102) is based on a machine-learning algorithm trained based on historical data indicative of previously executed historical deployments.

13. The method according to any one of the preceding claims,
wherein determining of the candidate deployments is logically separated from said selecting of the at least one deployment.

14. A computing node (202, 203, 204) comprising a processor configured to:
obtain (101) candidate deployments of software components to computing nodes of a distributed computing system determined in accordance with Quality of Service, QoS, parameters of the software components and resources of the computing nodes,
select (102) at least one deployment from the candidate deployments based on one or more selection constraints (10), and
trigger (103) execution of the at least one deployment.

15. The computing node (202, 203, 204) according to claim 14,
wherein the computing node (203) is an external node (203) not part of the distributed computing system.
